# EUROPÄISCHE PATENTSCHRIFT

(11) **EP 1 992 576 B1**
(45) Veröffentlichungstag und Bekanntmachung des Hinweises auf die Patenterteilung: **13.03.2013**
(21) Anmeldenummer: 08008395.9
(22) Anmeldetag: 03.05.2008
(51) Int. Cl.: B65D 90/04, B65G 65/30, B65G 65/34, B65G 67/04, B65G 67/60, B65G 69/08

(54) **Verfahren zum Befüllen und Entleeren von Transport-Containern mit Kunststoffgranulaten**
Method for filling and emptying transport containers with plastic granulates
Procédé de remplissage et de vidage de conteneurs de transport contenant des granulés de matière synthétique

(30) Priorität: 16.05.2007 DE 102007023098; 10.07.2007 DE 102007032017
(43) Veröffentlichungstag der Anmeldung: 19.11.2008
(73) Patentinhaber: Bayer MaterialScience AG, 51368 Leverkusen (DE)
(72) Erfinder: Kords, Christian, 47829 Krefeld (DE); Horl, Reiner, 47906 Kempen (DE); Franz, Uli Dr., 42659 Solingen (DE); Zimmermann, Raimund, 40764 Langenfeld (DE); Schniesko, Norbert, 51377 Leverkusen (DE)
(74) Vertreter: BIP Patents

(56) Entgegenhaltungen:
- EP-A- 1 354 823
- EP-A- 1 557 376
- WO-A-80/01793
- DE-A1- 10 122 885
- US-A1- 2007 048 110

## Beschreibung

Gegenstand der Erfindung ist ein Verfahren zum Befüllen von Transport-Containern mit Kunststoffgranulaten.

Es ist bekannt, hochreine Polycarbonat-Granulate unter Vermeidung von Kontaminationen mit Fremdstoffen in big-bags abzufüllen, bzw. daraus in andere Behältnisse zu entleeren. So wird z.B. in der DE-A 35 39 619 ein beutelartiger, zusammenlegbarer Behälter mit einem Innenliner, sowie mit Einfüll- und Auslaufschläuchen beschrieben, der das Transportgut beim Abfüllen, Transportieren und Entleeren vor Verunreinigungen schützt. Nachteilig an solchen big-bags ist das relativ geringe Fassungsvermögen von ca. 800 bis 1.000 kg und das ungünstige Stapelvolumen bzw. der daraus resultierende Verlust an Lademenge von ca. 4 to Granulat in 20 Fuß-Übersee-Containern, da anstelle von 20 to bei loser Schüttung nur ca. 16 to in Form gestapelter big-bags in einem 20 Fuß-Container Platz finden.

Es bestand daher seit langem Bedarf, eine geeignete Transporttechnik für große Übersee-Container zu entwickeln.

Es hat in der Vergangenheit nicht an Bemühungen gefehlt, geeignete Lösungen zu finden. So wird z.B. in der WO-A 2000/41950 ein Silofahrzeug zum bulk-Transport von größeren Mengen an Polycarbonat-Granulat beschrieben, das eine Handhabung des Granulats unter Vermeidung von Kontaminationen mit Fremdstoffen ermöglicht. Diese Silofahrzeuge sind nicht im Überseetransport und über lange Transportwege ökonomisch einsetzbar. Zusätzlich hat diese Art des Transportes den Nachteil, dass der Silo-Container immer nur für die gleiche Ware verwendet werden kann, oder dass beim Wechsel des Transportgutes eine aufwendige Reinigung erforderlich ist. Das beeinträchtigt die Disposition der Transportmittel insbesondere im Übersee-Verkehr ganz beträchtlich.

Es gab daher schon frühzeitig Vorschläge zur Verwendung von kostengünstigen in Fachkreisen sogenannten "Inlinern" als austauschbare Schutzhülle im Innern von Transport-Containern, die beliebige Gestalt haben können und mit deren Hilfe die obigen Nachteile überwunden werden können. Diese Vorzüge der Verwendung von Inlinern in Containern zum Transport von Schüttgütern sind bereits in US 3,696,952 beschrieben worden. Dort werden Techniken zur Befüllung des Inliners mit Schüttgütern und die Abführung der verdrängten Luft nach außen beschrieben, ebenso die Entleerung des geneigten Containers über eine eingesteckte Rutsche in der Entleeröffnung. Es handelt sich bei der Befüllung um Rohre, die in vorhandene Öffnungen im Inliner eingesteckt und nach der Befüllung wieder herausgenommen werden; die verbleibenden Öffnungen werden mit dickem Papier für den Transport verschlossen. Öffnungen, die auf diese Weise verschlossen werden, gewährleisten nicht die heutigen hohen Ansprüche an Dichtigkeit um Kontaminationen sicher ausschließen zu können.

Ein Verfahren zum Entleeren von Inlinern in Transport-Containern unter Vermeidung des Zerreißens der Inliner-Folie wird in EP-A 627 368 beschrieben. Dabei wird ein Transportgas unter erhöhtem Druck in den Inliner des liegenden Containers eingeblasen und an der Austritts-Öffnung wird das Schüttgut mit dem Transportgas durch Anlegen von Unterdruck über eine Rohrleitung aus dem Inliner herausgefördert. Da der Container nicht geneigt werden muss, wie bei Förderung durch Schwerkraft, kann der Inliner beim Entleervorgang nicht verrutschen und wird daher auch nicht beschädigt. Das Anlegen von Unterdruck birgt aber schon bei nur geringfügig undichten Rohrleitungs-Anschlüssen die Gefahr des Einsaugens von Umgebungsluft in sich, und damit auch die Gefahr der Kontamination von hochreinem Granulat mit unerwünschten Partikeln. Daher sind bei einem Verfahren unter Verwendung von Unterdruck extrem hohe Anforderungen an die Dichtigkeit der verwendeten Rohrleitungen zu stellen.

Ein Verfahren zum Entleeren von Transport-Einrichtungen, z.B. Eisenbahnwagen in Einhausungen zur Vermeidung von Kontaminationen des abzufüllenden rieselfähigen Produktes mit Verunreinigungen aus der Umgebung, wird in US 5,639,188 und US 5,868,528 beschrieben. Die verwendete abgeschlossene Einhausung ist dabei so groß, dass das gesamte Transportgebinde (Eisenbahnwagen, Transport-Container) darin Platz findet. Durch Einblasen von fein filtrierter, gereinigter Luft mit Hilfe eines Kreislaufsystems findet beim Kontakt von Granulat mit Umgebungsluft beim Öffnen der Transport-Vorrichtung keine Kontamination mit Fremdstoffen oder Partikeln statt. Die Förderung des Materials geschieht ebenfalls durch Unterdruck und mit gereinigter Luft. Die für dieses Verfahren benötigte Einhausung ist so groß und die Bereitstellung von filtrierter Luft so aufwendig, dass der Aufwand bei einer Vielzahl von Abnehmern und Abfüllern von Granulaten zu hoch ist. Daher besteht der Bedarf an einer technisch einfacheren aber ebenso sicheren Lösung.

Es bestand demnach weiterhin Bedarf an einem wirtschaftlich vorteilhaften und sicheren Verfahren für Granulat-Umfüllvorgänge von hochreinen Kunststoff-Granulaten, insbesondere Polycarbonat-Granulaten z.B. zur Herstellung von CDs, DVDs und anderen optischen Datenträgern, unter Vermeidung von Verunreinigungen bei diesen Umfüllvorgängen, welche die Qualität der Produkte erheblich beeinträchtigen können. Da solche Verunreinigungen entlang der gesamten Logistikkette auftreten können, bestand zudem Bedarf, ein solches Verfahren bereit zu stellen, welches sich sowohl für den Befüll- als auch für den Entleervorgang sowie für das verwendete Transportmittel eignet. Dabei soll insbesondere der Kontakt mit verunreinigenden Fremdsubstanzen bei allen Umfüllvorgängen und beim Transport vermieden werden. Da letztere technische Lösung auch Maßnahmen beim Abnehmer erfordert, sollte sie einfach, sicher durchführbar und kostengünstig sein. Auch eine optimale Raumausnutzung und die beliebige Disposition von Übersee-Containern sollten dabei im Fokus stehen.

Der Erfindung lag demnach die Aufgabe zugrunde, ein solches wirtschaftlich vorteilhaftes und sicheres Verfahren für Granulat-Umfüllvorgänge sowie die für den Einsatz in diesem Verfahren erforderlichen technischen Systeme, welche die Nachteile des Standes der Technik nicht aufweisen.

Überraschend wurde gefunden, dass diese Aufgabe gelöst wird, wenn ein Container-Befüll-System in der im Folgenden beschriebenen Art zur Verfügung gestellt wird, das sich beliebiger genormter Übersee-Container bedient, die mit geeigneten mit einem speziellen Schutzliner ausgestatteten auswechselbaren Inlinern ausgestattet werden. Damit entfallen einerseits Reinigungsarbeitern von Containern zur Entfernung von Verunreinigungen bzw. von Granulatresten und andererseits ist das hochreine Polycarbonat-Granulat in den Inlinern optimal vor Verunreinigungen geschützt. Durch Verwendung solcher passender Inliner kann das Fassungsvermögen der Übersee-Container optimal und besser genutzt werden, als durch stapelbare Kleingebinde. Auch ein Produktwechsel hinsichtlich des zu transportierenden Kunststoffgranulats ist ohne weitere Maßnahmen möglich, da keine Kontamination des Transport-Containers mit dem Transportgut erfolgt.

Gegenstand der vorliegenden Erfindung ist demnach ein Verfahren zum Befüllen von Transportcontainern mit Kunststoffgranulaten nach Anspruch 1.

Bei der Kabine zum Befüllen des Transport-Containers handelt es sich dabei um eine transportable und begehbare Kabine, welche zu diesem Zweck mit Öffnungen für Ein- und Ausstieg versehen. In der Kabine Herrschen Reinraumbedingungen. Unter Reinraumbedingungen ist zu verstehen, dass in die Kabine Reinluft (Klasse 5 nach VDI 2083) als laminarer Luftstrom eingeblasen wird.

In dem erfindungsgemäßen Verfahrens wird eine rundum geschossene, fahrbare Kabine zum Befüllen des Transport-Containers verwendet, die vor Beginn der Arbeiten unter einer vorhandenen Abfüllstelle für Granulat so positioniert ist dass alle notwendigen Verbindungen von Leitungen untereinander problemlos hergestellt werden können. Zum Schutz vor Querströmungen aus der Umgebungsluft ist der Andockbereich zwischen Kabine und Abfüllstelle bevorzugt durch seitlich herabhängende, geschlossene Vorhänge geschützt. Hinter diesen Vorhängen bewirkt eine von oben nach unten gerichtete laminare staubfreie Luftströmung, d.h. bevorzugt Luftströmung gemäß Reinraumbedingungen, das Fernhalten von Staubteilchen aus der Umgebungsluft.

Das Dach einer solchen für das erfindungsgemäße Verfahren geeigneten Kabine enthält bevorzugt mehrere verschließbare Öffnungen, durch die im geöffneten Zustand die vorzugsweise flexiblen Verbindungen der granulatzuführenden Leitung sowie der Druckluftleitung der Abfüllstelle mit den entsprechenden Anschlussstücken in der fahrbaren Kabine hergestellt werden können. Diese Anschlussstücke können in bevorzugten Ausführungsformen vorzugsweise direkt mit einer in der Kabine montierten Granulatfördervorrichtung, vorzugsweise einem Injektor, vorzugsweise einem pneumatischen Injektor verbunden sein. Die Granulatfördervorrichtung ist bevorzugt so eingebaut, dass die Auslassöffnung, durch die das Granulat austritt, an der Stirnwand der Kabine positioniert ist, an der der Transport-Container mit seiner Ladeöffnung ansteht.

Durch verschließbare Öffnungen in dieser Stirnwand der Kabine, d.h. der zum Transport-Container gerichteten Seite, können vorzugsweise flexible Verbindungen mit dem direkt dahinter anstehenden Transport-Container hergestellt werden. So wird beispielsweise die Austrittsöffnung der Granulatfördervorrichtung, die vorzugsweise die Form einer großen Tülle hat, mit einem Schlauch-Anschluss zum Befüllen des Inliners aus dem Transport-Container verbunden. Das zu fördernde Granulat nimmt in dieser bevorzugten Ausführungsform also den Weg aus der Abfüllstelle über eine vorzugsweise flexible Schlauchverbindung zur Granulatfördervorrichtung, und wird dort im Falle einer pneumatischen Förderung mit Druckluft über einen Schlauch-Anschluss in den Inliner des Transport-Containers geblasen. Die aus dem Inliner entweichende Druckluft wird während des vorzugsweise pneumatischen Fördervorgangs bevorzugt über vorzugsweise zwei - gegebenenfalls aber auch nur einen oder mehr als zwei - weitere Schlauch-Anschlüsse am Inliner in die fahrbare Kabine und von dort über Kanäle nach außen abgeleitet. Dafür sind an der Kabine weitere Anschlussstücke vorzugsweise in Form von großen Tüllen vorhanden, an denen diese Schlauchenden für die entweichende Luft mit Spannringen befestigt werden können.

Die Kabine selbst wird bevorzugt mit staubfreier Druckluft aus der Abfüllstation in der Weise beaufschlagt, dass eine nach unten gerichtete laminare Luftströmung entsteht, wodurch die Fremdteilchen aus Umgebungsluft vom Kunststoffgranulat ferngehalten werden.

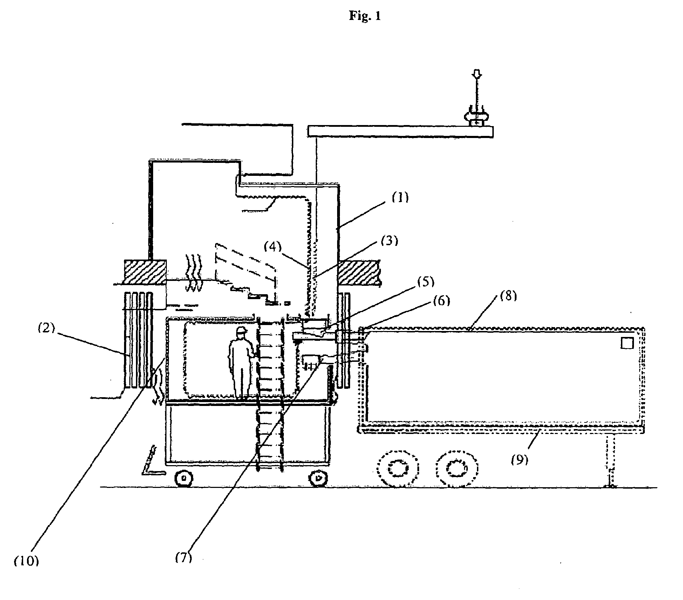

Eine bevorzugte Ausführungsform einer solchen Kabine ist beispielhaft in Fig. 1 beschrieben. Die Kabine (10) gemäß Fig. 1 ist unter einer vorhandenen Abfüllstelle (1) für Granulat so positioniert, dass alle notwendigen Verbindungen von Leitungen untereinander problemlos hergestellt werden können und durch seitlich herabhängende, geschlossene Vorhänge (2) vor Umgebungsluft geschützt. Im Dach der Kabine befinden sich verschließbare Öffnungen für die flexiblen Verbindungen der granulatzuführenden Leitung (3) sowie für die Druckluftleitung der Abfüllstelle (4), welche direkt mit einem in der Kabine montierten pneumatischen Injektor (5) verbunden sind. Die Injektor-Austrittsöffnung ist mit dem Schlauch-Anschluss zum Befüllen (6) des Inliners (8) im Transport-Container (9) verbunden. Durch weitere Schlauch-Anschlüsse am Inliner (7) wird die aus dem Inliner entweichende Druckluft über Kanäle in der Kabine nach außen abgeleitet. Aus perspektivischen Gründen ist der Schutzliner in Fig. 1 nicht dargestellt, im Rahmen der Erfindung aber sehrwohl vorhanden.

Die Leitungen zwischen Abfüllstation und dem Injektor, z.B. die granulatzuführende Leitung sowie die Druckluftleitung, sind vorzugsweise flexibel. Sie können aus unterschiedlichen Materialien gefertigt sein, vorzugsweise sind sie jedoch aus einem gegenüber dem Granulat abriebfestem Material gefertigt. Ein solches Material ist beispielsweise Edelstahl. Bevorzugt sind sie aus Edelstahlgewebe mit innen liegendem Edelstahlwellrohr gefertigt. Besonders bevorzugt werden sie über Flanschverbindungen angeschlossen. Die Verbindungen zwischen Transport-Container und Kabine können ebenfalls aus unterschiedlichen Materialien gefertigt sein. Auch diese Verbindungen sind bevorzugt flexibel. Vorzugsweise handelt es sich bei diesen um die Schlauch-Anschlüsse des Inliners, welche als Kunststoffschlauchendstücke aus dem Material des Inliners ausgebildet sind, die über die entsprechenden, vorzugsweise als Tüllen ausgebildeten Gegenstücke an der Kabine übergestülpt und mit Spannringen befestigt werden.

Das Kunststoffgranulat kann aus den vorhandenen Abfüllvorrichtungen mittels unterschiedlicher Granulatfördervorrichtungen in den Inliner befördert werden. Hierzu eignen sich Förderbänder, beispielsweise sogenannte Granulatwerfer bzw. Schleuderbänder, oder Injektoren.

Förderbänder, beispielsweise sogenannte Granulatwerfer bzw. Schleuderbänder sind dem Fachmann bekannt und handelsüblich. Sie werden z.B. von der Firma SSB Wägetechnik GmbH angeboten.

Bevorzugt wird das Kunststoffgranulat aus den vorhandenen Abfüllvorrichtungen pneumatisch mittels eines Injektors in den Inliner des Transport-Containers befördert. Besonders bevorzugt wird für die Beförderung trockene, staubfreie Druckluft verwendet. Im Rahmen der Erfindung ist unter trockener Druckluft bevorzugt solche mit einem Taupunkt von kleiner als -15°C und unter staubfreier Druckluft bevorzugt solche, die mit einem H 13-Filter und nachgeschaltetem 30 µm Kerzenfilter gefiltert wurde, zu verstehen.

Die pneumatische Förderung von Granulaten ist dem Fachmann grundsätzlich bekannt und kann mit handelsüblichen Injektoren erfolgen. Bezüglich Materialauswahl können die Injektoren jedoch auch auf die speziellen Verhältnisse des entsprechenden Kunststoffgranulat angepasst sein. Als Materialien für Injektoren eignen sich unterschiedliche Materialien, wie z.B. Stahl, Aluminium, Edelstahl u.a.. Für Polycabonatgranulat als besonders bevorzugtes Kunststoffgranulat eignen sich bevorzugt solche Materialien, die gegenüber Polycarbonat abriebfest sind. Hierfür eignet sich besonders bevorzugt Edelstahl als Material.

Der verwendete Injektor kann in einer bevorzugten Ausführungsform der Erfindung vorzugsweise beweglich angeordnet sein, um eine einwandfreie Befüllung des Inliners im Transport-Container zu gewährleisten. Die verwendete Druckluft ist bevorzugt trocken und staubfrei. Sie kann beispielsweise in einer 3-stufigen Filterstation an Papierflachfiltern mit den Filtergrößen F6, F9, H13 gereinigt werden. Die Förderluftmenge pro kg Granulat beträgt vorzugsweise zwischen 0,8 und 2,5 Nm³, bevorzugt zwischen 1,0 und 2,0 Nm³, besonders bevorzugt zwischen 1,5 und 1,6 Nm³. Der Druck der Förderluft am Eingang des Injektors liegt vorzugsweise zwischen 0,5 und 2,0 bar_{Ü}, bevorzugt zwischen 0,8 und 1,5 bar_{Ü}, besonders bevorzugt zwischen 0,8 und 1,0 bar_{Ü} (bar_{Ü} = bar Überdruck).

Die in die Kabine zurückgeleitete Förderluft aus dem Inliner wird vorzugsweise nach außen abgegeben.

In der besonders bevorzugten Ausführungsform des erfindungsgemäßen Verfahrens, bei dem Polycarbonatgranulat als Kunststoffgranulat verwendet wird, ist es besonders vorteilhaft, wenn alle Bestandteile der Kabine, die mit dem Granulat in Kontakt kommen, aus Edelstahl gefertigt sind, d.h. insbesondere die granulatzuführende Leitung zwischen Abfüllstation und dem Injektor und der Injektor.

Bei dem Transport-Container kann es sich um einen beliebigen Container handeln, der für den Transport von Kunststoffgranulaten geeignet ist. Bevorzugt sind großvolumige, für den ÜberseeTransport geeignete Container geeignet. Vorzugsweise handelt es sich dabei um einen genormten Übersee-Container mit einer Ladeöffnung an einer Stirnseite und einer Länge von 20 Fuß (6 m). In den Transport-Container wird vor dem Befüllvorgang ein flexibler sogenannter "Inliner" aus Kunststoffmaterial eingezogen, der praktisch das gesamte freie Volumen des Containers ausfüllt.

Der Inliner kann aus beliebigem flexiblem Kunststoffmaterial gefertigt sein. Bevorzugt ist solches Kunststoffmaterial, welches gegenüber dem zu befördernden Granulat abriebfest ist. Vorzugsweise handelt es sich bei dem Inliner um einen solchen aus Polyethylen.

Je nach Reinheitsanforderungen an das zu transportierende Kunststoffgranulat kann es, um die Kontamination von Granulat durch Fremdpartikel aus dem Inliner zu vermeiden, vorteilhaft sein, dass der Inliner vorzugsweise unter Reinraumbedingungen gefertigt und verschweißt wird.

Der Inliner verfügt über mehrere Schlauch-Anschlüsse, wobei diese vorzugsweise alle an der gleichen Stirnseite positioniert sind. Diese Stirnseite würde bei Bestücken des Containers mit dem Inliner zu der Seite gerichtet, an der sich auch die Ladeöffnung des Containers befindet. Die Schlauchanschlüsse sind vorzugsweise in Form von Schlauchendstücken ausgebildet und besonders bevorzugt aus dem gleichen Material wie der Inliner. Diese Schlauch-Anschlüsse dienen dem Befüllvorgang für das Einblasen des Granulats, dem Abführen der Förderluft sowie der Entleerung des befüllten Inliners.

In einer bevorzugten Ausführungsform des Inliners verfügt dieser über mindestens vier Schlauch-Anschlüsse an der Stirnseite. Dabei befinden sich drei von diesen Schlauch-Anschlüssen im oberen Bereich der Stirnseite des Inliners und werden beim Befüllvorgang für das Einblasen des Granulats bzw. für das Abführen der Förderluft verwendet. Üblicherweise dienen hierbei ein Schlauch-Anschluss zum Einblasen des Granulats und zwei Schläuche zum Abführen der Förderluft. Der vierte Schlauch-Anschluss befindet sich vorzugsweise im unteren Bereich der Stirnseite des Inliners und wird für die Entleerung verwendet. Derartige Inliner sind bereits bekannt, handelsüblich und auch im zitierten Stand der Technik beschrieben, siehe US 6,481,598 B1, US 5,531,361 und EP-A 1 101 712.

Der Inliner ist erfindungsgemäß mit einem zusätzlichen Schutzliner ausgestattet. Dieser Schutzliner ist vorzugsweise ebenfalls dicht mit dem Inliner verbunden. Dabei kann der Inliner entweder fest mit diesem Schutzliner verbunden sein, z.B. durch Verkleben oder Verschweißen, oder vorzugsweise lediglich zusammen mit diesem in den entsprechenden Container montiert werden, ohne dass eine solche feste Verbindung besteht. Eine solche Montage kann beispielsweise so erfolgen, dass der Schutzliner nach Einbringen des Inliners in den Container vor die Stirnseite des Inliners mit den Schlauch-Anschlüssen montiert und beispielsweise innen am Container befestigt wird. So kann ein Verrutschen bei Belade-, Transport- und Entleervorgang vermieden werden.

Der Schutzliner ist vorzugsweise aus einem Kunststoffgewebe gefertigt. Hierfür kommt beispielsweise Polyethylen, Polypropylen oder Polyestergewebe in Frage. In bevorzugten Ausführungsformen ist dies Polyethylengewebe. Solche Kunststoffgewebe, insbesondere Polyethylengewebe sind dem Fachmann bekannt. Dabei kann es sich beispielsweise um Multifilamentgewebe handeln. In bevorzugten Ausführungsformen der Erfindung sind dies Multifilamentgewebe, insbesondere Polyethylengewebe, mit einer Fadenstärke von 130 bis 200 g/m², besonders bevorzugt von 150 bis 190 g/m². Die Fadenstärke kann dabei bevorzugt eine Variationsbreite von ± 3% bis ± 8%, besonders bevorzugt von ± 5% aufweisen.

Der Schutzliner dient dem Schutz des Inliners. Unter anderem dient er dazu, beim Befüllen und/oder Entleeren des Inliners wenigstens einen der Schlauch-Anschlüsse bzw. während des Befüll- und/oder Entleervorganges die dazu geknüpfte Schlauchverbindung zwischen Inliner und Kabine vor äußeren Witterungseinflüssen z.B. bei Abfüllvorgängen im Freien zu schützen. Der Schutzliner weist daher vorzugsweise wenigstens einen Stutzen auf, der wenigstens einen der Schlauch-Anschlüsse bzw. während des Befüll- und/oder Entleervorganges die dazu geknüpfte Schlauchverbindung zwischen Inliner und Kabine umgibt und somit schützt. Im Folgenden werden bevorzugte Ausführungsformen eines solchen Schutzliners beschrieben. In bevorzugten Ausführungsformen umgibt ein solcher Stutzen den Schlauch Anschluss beim Entleeren bzw. während des Entleervorganges die dazu geknüpfte Schlauchverbindung zwischen Inliner und Kabine. Der Stutzen wird vorzugsweise vor dem Befüll- und/oder Entleervorgang, gemäß vorangehend genannter bevorzugter Ausführungsform vor dem Entleervorgang an der Entleerkabine befestigt. Vorteilhafterweise wird erst danach der entsprechende Schlauch-Anschluss des Inliners für den Befüll- und/oder Entleervorgang, gemäß vorangehend genannter bevorzugter Ausführungsform für den Entleervorgang über eine Öffnung aus der Kabine heraus durch den Kanal, der vom Stutzen des Schutzliners gebildet wird, durchgezogen und an der entsprechenden Befüll- oder Entleerfördervorrichtung in der Kabine befestigt, beispielsweise an der Injektoraustrittsöffnung in der Befüllkabine oder der Zellradschleuse in der Entleerkabine. Das Abklemmen der Schlauch-Anschlüsse nach Beendigung des Befüll- oder Entleervorganges erfolgt vorteilhafterweise ebenfalls, solange der Stutzen des Schutzliners noch an der Kabine befestigt ist. Auf diese Weise werden beim Vorgang des Anklemmens der Schlauch-Anschlüsse Fremdpartikel aus der Umgebung ferngehalten.

In weiteren bevorzugten Ausführungsformen weist der Schutzliner eine zusätzliche Klappe auf, die dem Schutz der Schlauch-Anschlüsse für den Befüllvorgang dient. Die Klappe kann zu diesem Zweck bevorzugt für den Transport über die entsprechenden Schlauch-Anschlüsse geklappt und mit entsprechenden Befestigungsvorrichtungen, vorzugsweise solchen, die den Schutzliner nicht beschädigen, wie z.B. einfache Kletteverschlüsse, arretiert werden. In weiteren bevorzugten Ausführungsformen kann der Schutzliner einen oder mehrere, bevorzugt vier Flügel an den vier Kanten aufweisen, die über die Abmessungen der Stirnseite des Inliners hinausragen. Diese Flügel können vorteilhaft hinsichtlich der Dichtigkeit beim Befüll- und/oder Entleervorgang des Inliners sein, da diese sowohl durch das Gewicht des Kunststoffgranulats beim Entleervorgang, als auch durch die Druckluft beim Befüllvorgang an die Containerwand angedrückt werden.

Der Inliner verfügt in einer bevorzugten Ausführungsform weiterhin über mindestens zwei, mit Druckluft aufblasbare Kammern, die durch Aufblasen beim Entleervorgang dafür sorgen, dass aus den sonst üblichen Ecken des rechteckigen Inliners an der Stirnseite dann Schrägen entstehen, sodass eine vollständige Entleerung des Containers im geneigten Zustand möglich wird. Zum Aufblasen dieser Kammern sind in dieser bevorzugten Ausführungsform entsprechende weitere Schlauchanschlüsse für Druckluft am Inliner vorhanden.

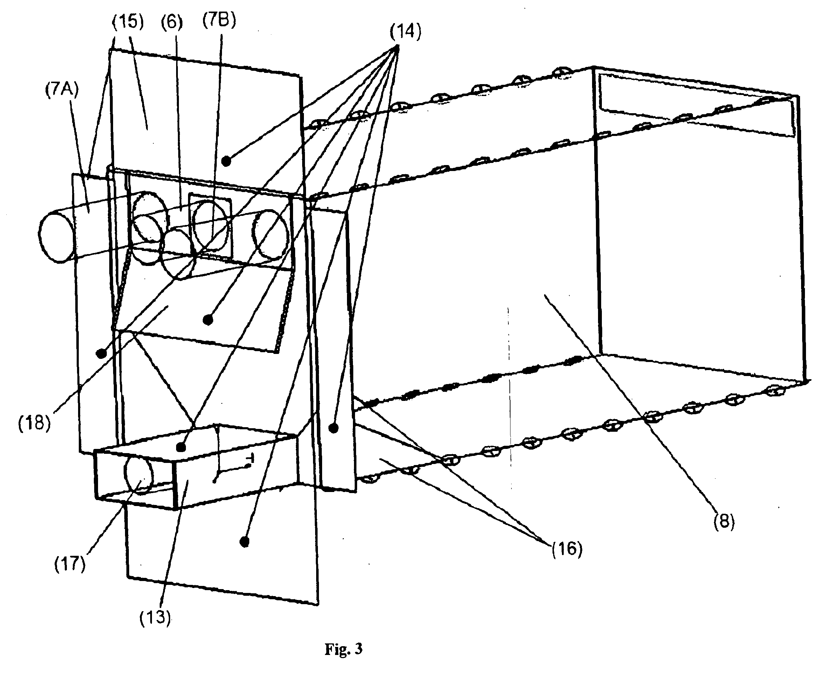

Fig. 3 zeigt schematisch eine bevorzugte Ausführungsform eines Inliners (8) mit einem solchen Schutzliner (14). Der Inliner weist zwei, mit Druckluft aufblasbare Kammern (16) und an der Stirnseite vier Schlauch-Anschlüsse (6), (7A), (7B) und (17) auf, wovon der Schlauch-Anschluss (6) dem Befüllen des Inliners mit Kunststoffgranulat, die Schlauch-Anschlüsse (7A) und (7B) dem Ausführen der überschüssigen Druckluft und Schlauch-Anschluss (17) dem Entleeren des Inliners dienen. Der Stutzen (13) des Schutzliners umgibt den Schlauch-Anschluss (17), die Klappe (18) kann zum Schutz der Schlauch-Anschlüsse (6), (7A) und (7B) für den Transport hochgeklappt und arretiert werden. Weiterhin weist der Schutzliner 4 Flügel (15) an den Kanten auf. Die Form des Stutzens ist in Fig. 3 mit rechteckigem Querschnitt gezeichnet, kann aber in anderen Ausführungsformen beliebige andere Querschnitte, wie z.B. rund oder oval haben, die ggf. auch in Richtung vom Inliner weg zu- oder abnehmen können.

Solche Inliner mit zusätzlichem Schutzliner sind bisher im Stand der Technik noch nicht beschrieben und daher ebenfalls Gegenstand der vorliegenden Erfindung.

Die Inliner werden üblicherweise wie eine Einwegverpackung genutzt und nach Gebrauch entsorgt oder für Anwendungen eingesetzt, bei denen keine derart hohen Anforderungen an die Reinheit des Transportgutes gestellt werden.

Während des Transports sind die Schlauchanschlüsse des Inliners durch geeignete Klemmverbindungen dicht verschlossen und durch den Schutzliner vor Verschmutzung geschützt.

Da potentielle Quellen von Verunreinigungen für das Granulat entlang der gesamten Logistik-Kette vorhanden sind, wäre es besonders vorteilhaft und war daher auch wünschenswert, die Reinheit des Granulats vom Hersteller bis zum Kunden zu gewährleisten. Dies würde sowohl die vorangehend genannten Schritte der Granulat-Handhabung bei der Abfüllung beim Hersteller oder Abgeber des Granulats über das Transportmittel als auch die Granulat-Entnahme beim Abnehmer, d.h. das Entleeren des Transport-Containers umfassen. Überraschend eignet sich das vorangehend beschriebene erfindungsgemäße Verfahren für eine solche Vorgehensweise, wenn es durch einfache Maßnahmen zum Entleeren des Containers beim Abnehmer ergänzt wird.

Das erfindungsgemäße Verfahren zum Befüllen und Entleeren von großvolumigen Transportcontainern eignet sich hervorragend, um die Reinheit des transportierten Kunststoffgranulats vom Hersteller bis hin zum Kunden zu gewährleisten. Die beim Kunden durchzuführenden Maßnahmen sind einfach, sicher durchführbar und kostengünstig. Außerdem bietet das Verfahren eine optimale Möglichkeit zur Raumausnutzung innerhalb der Transport-Container.

Die erfindungsgemäßen Verfahren zum Befüllen bzw. Befüllen und Entleeren von großvolumigen Transportcontainern sowie der erfindungsgemäße Inliner mit dem Schutzliner eignen sich weiterhin besonders gut für den Einsatz im Überseetransport. Der Einsatz von Unterdruck ist in keinem der Schritte erforderlich und auch eine aufwendige Reinigung des Containers beim Wechsel des Transportgutes entfallen.

Die erfindungsgemäßen Verfahren zum Befüllen bzw. Befüllen und Entleeren von großvolumigen Transportcontainern eignen sich für beliebige Kunststoffgranulate. Solche Kusnstoffgranulate sind im Rahmen der Erfindung beliebige Polymergranulate unterschiedlichster Granulatgröße. Beispiele für solche Kunststoffgranulate sind Polycarbonatgranulate oder Polypropylengranulate, bevorzugte Kunststoffgranulate sind Polycarbonatgranulate. Besonders bevorzugt werden die erfindungsgemäßen Verfahren beim Transport hochreiner Kunststoffgranulate, beispielsweise für die Herstellung von CDs, DVDs und anderen optischen Anwendungen, eingesetzt. Insbesondere bevorzugt ist hier wiederum Polycarbonatgranulat.

Die für das erfindungsgemäße Verfahren zum Befüllen von Transportcontainern sowie das erfindungsgemäße Verfahren zum Befüllen und Entleeren von Transportcontainern vorangehend genannten Vorzugsbereiche gelten hier analog.

Die Figuren beschreiben beispielhaft die Erfindung und sind nicht als Beschränkung aufzufassen.
Fig. 1: Schematische Darstellung einer Befüllvorrichtung
Fig. 2: Schematische Darstellung einer Entleervorrichtung
Fig. 3: Schematische Darstellung eines Inliners mit Schutzliner

Die folgenden Beispiele dienen der exemplarischen Erläuterung der Erfindung und sind nicht als Beschränkung aufzufassen.

### Beispiele

### Beispiel 1 (erfindungsgemäß):

20 t Polycarbonatgranulat (Granulatgröße 2.5 x 3.0 mm) wurden über eine Befüllkabine gemäß Fig. 1 in einen mit einem erfindungsgemäßen Inliner versehenen 20 Fuß Container gefüllt. Hierzu wurden die Druckluftleitung (4) sowie die granulatzuführende Leitung (3) durch die Öffnungen im Dach der Kabine direkt mit dem Injektor (5) in der Kabine verbunden. Außerdem wurden die Injektor-Austrittsöffnung und der Schlauch-Anschluss zum Befüllen (6) des Inliners (8) in Form eines beweglichen Luftschlauches verbunden. Die beiden Abluftschläuche (7) wurden in zwei ovale Abluftrohre der Kabine eingelegt und durch den austretenden Luftstrom an die Rohrwandungen gepresst. Dieser austretende Förderluftstrom verlässt die Befüllkabine (10) durch zwei seitliche Abluftklappen. Durch Dachluken wurde Reinluft in die Befüllkabine (10) einströmen gelassen, um Stäube von außen fern zu halten.

Nach dem Ausrichten des Injektors (5) begann die Befüllung des Containers (9). Dazu wurden die Ventile für Förderluft auf 1400 bis 1800 Nm³/h eingestellt und das Polycarbonat-Granulat mit einem Druck von 0.5 bis 0.8 bar und einem Durchsatz von 10 bis 15 t/h in den Inliner des Containers befördert.

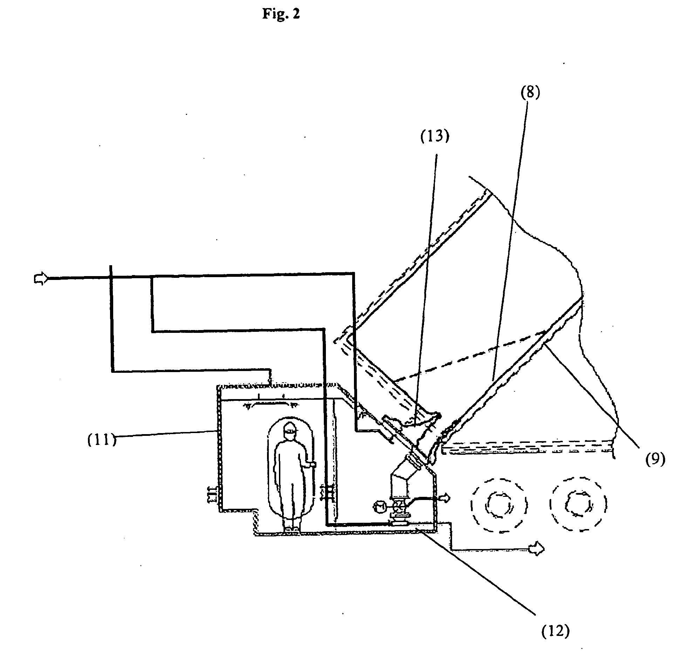

Zur Entleerung des Granulats aus dem Inliner wurde eine Entleerkabine gemäß Fig. 2 verwendet. Zur Entleerung des Granulats aus dem Inliner (8) im Bulk Container (9) wurde dieser an der erfindungsgemäßen Entleerkabine (11) genau positioniert. Die Entleerkabine war an der Vorderseite um 45° abgeschrägt, damit der Bulk Container bis zu diesem Neigungswinkel gekippt werden konnte. Auf dieser Schräge befand sich ein ovaler Stutzen, an dem der Schutzliner (13) des Inliners aus dem Bulk Container von außen mit Destako-Spannern befestigt wurde. Von Innen aus der Entleerkabine wurde der Befüllschlauch (17, Fig.3) eingezogen und auf dem Anschluss-Stutzen der Zellenradschleuse (12) befestigt. Auf diese Weise entstand eine Verbindung zwischen dem Inliner des Bulk Containers und der Entleerkabine, die auch bei ungünstigen Umgebungsbedingungen vollkommen dicht nach außen abgeschlossen war. Vom Zellenrad aus wurde das Granulat mit einer Druckluftmenge von 1.000 bis 1.400 Nm³/h bei 0,5 bis 0,8 bar aus dem Bulk Container über einen flexiblen Edelstahlschlauch (s. breiter Pfeil, Fig. 2) durch die Förderleitung in ein Lagersilo gefördert.

Zur Gewährleistung von Reinraumbedingungen während des Entleervorgangs wurde die Entleerkabine mit ca. 400 Nm³ Druckluft/h über eine Leitung beschleiert, um das Eindringen von Außenluft zu verhindern. Die Beschleierungsluft wurde über den Filtereinsatz in der Zwischentür abgeführt. Die gesamte benötigte Druckluft war trocken und staubfrei.

Nach europäischer Norm FEM 2482 (Messmethode zur Ermittlung von Feinanteilen und Fäden in Kunststoffgranulat) wurde der Staubanteil im umgefüllten Polycarbonatgranulat bestimmt. Mittels eines Scanner-Tests wurde die Qualitätskennzahl (QK) des Granulats ermittelt. Dabei befand sich die Probenahmestelle am Ende der Förderleitung aus der Entleerkabine. Es wurde eine QK von 2 und ein Staubanteil von 87 bis 88 mg/kg ermittelt.

### Beschreibung der Qualitätskennzahl (QK):

Die QK wird am fertigen Spritzgußkörper (hier eine CD-Platte) bestimmt, der aus dem zu prüfenden PC-Granulat hergestellt wird. Eine nicht metallisierte Audio-CD wird mit Hilfe eines Laser-Scanners (Scanneranlage HRD5 der Fa. Dr. Schenk, München) in Transmission vermessen. Ausgewertet werden die Signale aus der Detektion im Hellfeld, im Dunkelfeld und die Messwerte der Doppelbrechung. Die Messergebnisse werden mit den Merkmalen von Referenz-Datensätzen verglichen. Für die notwendige Sauberkeit für die weitere Verarbeitung eines PC-Granulats ist es erforderlich, dass die Daten aller Referenzdatensätze unterschritten werden, d.h. kleiner 100% liegen. Liegen die aktuellen Messdaten im Bereich 50 bis 99%, so lautet die QK = 2; liegen die Daten bei < 50%, so ist QK = 1; liegen die Daten bei > 100%, so ist die QK = 3. Die Referenzdatensätze beruhen auf der Definition von 20 Fehlerklassen; die einzelnen Messwertgrenzen in diesen Fehlerklassen sind durch statistische Methoden festgelegt.

### Vergleichsbeispiel 1:

20 t Polycarbonatgranulat (Granulatgröße 2.5 x 3.0 mm) wurden zum Transport ohne Einsatz der erfindungsgemäß zu verwendenden Befüllkabine in Big-Bags gefüllt. Hierzu wurde das Granulat über eine entsprechende Abfüllvorrichtung ebenfalls mit einer Förderluftmenge von 1400 bis 1800 Nm³/h und einem Druck von 0.5 bis 0.8 bar und einem Durchsatz von 40 t/h in eine entsprechende Anzahl von Big-Bags gefüllt.

Wie in Beispiel 1 wurden Staubanteil und QK des abgefüllten Granulats ermittelt. Dabei befand sich die Probennahmestelle entsprechend im Ablauf zum Big-Bag. Es wurde eine QK von 2 und ein Staubanteil von 90 mg/kg ermittelt.

### Beispiel 2 (erfindungsgemäß):

Unter den gleichen Bedingungen wie in Beispiel 1 wurden 20 t einer anderen Partie Polycarbonatgranulat (gleicher Granulatgröße wie in Beispiel 1) in einem 20 Fuß Container befördert und dieser wieder entleert.

Wie in Beispiel 1 wurden Staubanteil und QK des abgefüllten Granulats ermittelt. Es wurde eine QK von 2 und ein Staubanteil von 77 mg/kg ermittelt.

### Vergleichsbeispiel 2:

Wie in Vergleichsbeispiel 1 wurden 20 t Polycarbonat der gleichen Partie wie in Beispiel 2 in Big-Bags gefüllt.

Wie in Beispiel 1 wurden Staubanteil und QK des abgefüllten Granulats ermittelt. Es wurde eine QK von 2 und ein Staubanteil von 77 mg/kg ermittelt.

Von den abgefüllten Big-Bags gemäß Vergleichsbeispielen können jedoch nicht die gesamten 20 t abgefülltes Polycarbonatgranulat in einem der 20 Fuß Container platziert werden, da diese ein ungünstiges Stapelvolumen aufweisen. Hingegen können nach dem erfindungsgemäßen Verfahren ohne Schwierigkeiten 20 t Polycarbonatgranulat in dem Inliner des 20 Fuß Containers platziert werden. Die Beispiele zeigen somit die Vorteile des erfindungsgemäßen Verfahrens einerseits auf der Seite der optimalen Ausnutzung des Fassungsvermögens der Transportcontainer, welche sich unter anderem in der verbesserten Wirtschaftlichkeit des Transport durch Reduktion der Anzahl erforderlicher Container widerspiegelt.

Weiterhin zeigen die Beispiele, dass das erfindungsgemäße Verfahren zudem eine Befüllung des Polycarbonatgranulats in die Transportcontainer ermöglicht, bei welcher die Staubbelastung gegenüber der herkömmlichen Big-Bag-Befüllung auf gleich hoher Qualität gehalten bzw. noch verbessert werden kann.

Nach Beendigung des Entleervorgangs gemäß erfindungsgemäßem Verfahren entsprechend der Beispiele 1 und 2 wurden die Druckluftschläuche entspannt und abgekoppelt; ebenso der Granulatförderschlauch. Die Inlinerschlauchanschlüsse wurden in umgekehrter Reihenfolge wie beim Anschließen abgeklemmt und verschlossen. Der entleerte Inliner kann komplett aus dem Bulk Container entnommen und für den Transport in einem anderen Bulk Container erneut verwendet werden, oder er kann in demselben Bulk Container für einen erneuten Transport wieder verwendet werden.

## Patentansprüche

1. Verfahren zum Befüllen von großvolumigen Transportcontainern mit hochreinen Kunststoffgranulaten, unter Verwendung
• einer Abfüllstelle (1) mit den Kunststoffgranulaten
• einer rundum geschlossenen transportablen und begehbaren Kabine (10) mit Vorrichtungen zur Übernahme von Kunststoffgranulat aus vorhandenen Abfüllstelle (1) und mit Vorrichtungen zur Abfüllung des der Kunststoffgranulats wobei die Kabine mit Öffnungen für Ein- und Ausstieg versehen ist und in der Kabine Reinraumbedingungen herrschen, wobei sich im Dach der Kabine verschließbare Öffnungen befinden für die flexiblen Verbindungen einer granulatzuführenden Leitung (3) sowie für eine Druckluftleitung der Abfüllstelle (1), welche direkt mit einem in der Kabine montierten pneumatischen Injektor (5) verbunden sind und wobei die Injektor-Austrittsöffnung mit einem Schlauch-Anschluss (6) zum Befüllen des Inliners (8) im Transport-Container (9) verbunden ist,
• ein Transport-Container (9) mit einem flexiblen Kunststoff-Inliner (8), der an der Stirnseite wenigstens einen Schlauch-Anschluss (6) für das Einfüllen von Kunststoffgranulat, wenigstens einen Schlauch-Anschluss (7) für das Ableiten von eingeblasener Förderluft aus dem Transport-Container (9) heraus und wenigstens einen Schlauch-Anschluss (17) zur Entleerung des Inhalts aufweist, mit Kunststoffgranulat befüllt wird, wobei der flexible Kunststoff-Inliner (8) an der Stirnseite, die die vorangehend genannten Schlauch-Anschlüsse (6, 7, 17) aufweist mit einem zusätzlichen Schutzliner (14) ausgestattet ist,
wobei die folgenden Schritte durchgeführt werden:
• die Kabine (10) wird unter der Abfüllstelle (1) für Granulat positioniert und alle notwendigen Verbindungen von Leitungen untereinander werden hergestellt,
• die Kabine (10) selbst wird mit trockener, staubfreier Druckluft aus der Abfüllstelle (1) in der Weise versehen, dass eine nach unten gerichtete laminare Luftströmung entsteht,
• durch die Schlauch-Anschlüsse (6) am Inliner (8) wird die aus dem Inliner entweichende Druckluft über Kanäle in der Kabine nach außen abgeleitet,
• das Kunststoffgranulat wird aus der Abfüllstelle (1) pneumatisch mittels der Injektors (5) in den Inliner (8) des Transport-Containers (9) befördert.

2. Verfahren gemäß Anspruch 1, **dadurch gekennzeichnet, dass** aus dem Schlauch-Anschlüssen (6), (7) und (17) des Inliners (8) flexible Schlauchverbindungen zwischen Kabine (10) und Inliner (8) des Transport-Containers (9) gebildet werden, die über die als Tüllen ausgebildete Gegenstücke an der Kabine (10) übergestülpt und mit Spannringen befestigt werden.

3. Verfahren gemäß Anspruch 1 oder 2, **dadurch gekennzeichnet, dass** für die Förderung trockene, staubfreie Druckluft verwendet wird.

## Claims

1. Method for filling of large-volume transport containers with high-purity plastic granules, using
• a decanting point (1) with the plastic granules,
• a transportable and accessible cabin (10) which is closed all the way around and has devices for transferring plastic granules from the available decanting point (1) and has devices for decanting the plastic granules, wherein the cabin is provided with entry and exit openings and clean room conditions prevail in the cabin, wherein closable openings are located in the roof of the cabin for the flexible connections of a granule-supplying line (3) and for a compressed air line of the decanting point (1), said lines being directly connected to a pneumatic injector (5) mounted in the cabin, and wherein the injector outlet opening is connected to a hose connection (6) for filling the inliner (8) in the transport container (9),
• a transport container (9) with a flexible plastic inliner (8) which has, on the end side, at least one hose connection (6) for the pouring-in of plastic granules, at least one hose connection (7) for conducting blown-in conveying air out of the transport container (9), and at least one hose connection (17) for emptying the contents, and is filled with plastic granules, wherein the flexible plastic inliner (8) is equipped with an additional protective liner (14) on the end side which has the abovementioned hose connections (6, 7, 17),
wherein the following steps are carried out:
• the cabin (10) is positioned under the decanting point (1) for granules and all of the necessary connections of lines to one another are produced,
• the cabin (10) itself is provided with dry, dust-free compressed air from the decanting point (1) in such a manner that a downwardly directed laminar air flow is produced,
• by means of the hose connections (6) on the inliner (8), the compressed air escaping from the inliner is conducted away outwards via ducts in the cabin,
• the plastic granules are conveyed pneumatically out of the decanting point (1) by means of the injector (5) into the inliner (8) of the transport container (9).

2. Method according to Claim 1, **characterized in that** flexible hose couplings between the cabin (10) and inliner (8) of the transport container (9) are formed from the hose connections (6), (7) and (17) of the inliner (8), said hose couplings being pulled over the counterparts, which are designed as nozzles, on the cabin (10) and being fastened by clamping rings.

3. Method according to Claim 1 or 2, **characterized in that** dry, dust-free compressed air is used for the conveying.

## Revendications

1. Procédé de remplissage de conteneurs de transport de grand volume avec des granulés de matière synthétique de haute pureté, avec utilisation
• d'un poste de remplissage (1) avec les granulés de matière synthétique,
• d'une cabine au pourtour fermé (10), transportable et accessible, avec des dispositifs destinés à recevoir des granulés de matière synthétique à partir du poste de remplissage existant (1) et avec des dispositifs pour le chargement des granulés de matière synthétique, dans lequel la cabine est munie d'ouvertures pour l'accès et la sortie et il règne dans la cabine des conditions de chambre propre, dans lequel des ouvertures pouvant être fermées se trouvent dans le toit de la cabine pour les raccordements flexibles d'une conduite d'amenée de granulés (3) ainsi que pour une conduite d'air sous pression du poste de remplissage (1), qui sont raccordées directement à un injecteur pneumatique (5) monté dans la cabine et dans lequel l'orifice de sortie de l'injecteur est raccordé à un raccord de tuyau (6) pour le remplissage de la doublure intérieure (8) dans le conteneur de transport (9),
• d'un conteneur de transport (9) avec une doublure intérieure souple en matière synthétique (8), qui présente sur le côté frontal au moins un raccord de tuyau (6) pour le chargement de granulés de matière synthétique, au moins un raccord de tuyau (7) pour l'évacuation de l'air de transport insufflé hors du conteneur de transport (9) et au moins un raccord de tuyau (17) pour la vidange du contenu, que l'on remplit de granulés de matière synthétique, dans lequel la doublure intérieure flexible en matière synthétique (8) est équipée d'une doublure de protection supplémentaire (14) sur le côté qui présente les raccords de tuyau (6, 7, 17) mentionnés ci-dessus,
dans lequel on exécute les étapes suivantes:
• on positionne la cabine (10) sous le poste de remplissage (1) pour les granulés et on réalise tous les raccordements nécessaires des conduites entre elles,
• on alimente la cabine (10) elle-même avec de l'air sous pression sec dépoussiéré provenant du poste de remplissage (1), de telle manière qu'il se forme un écoulement d'air laminaire dirigé vers le bas,
• par les raccords de tuyau (6) à la doublure intérieure (8), on évacue l'air sous pression s'échappant hors de la doublure intérieure par des canaux dans la cabine vers l'extérieur,
• on transfère les granulés de matière synthétique en provenance du poste de remplissage (1) par voie pneumatique au moyen de l'injecteur (5) dans la doublure intérieure (8) du conteneur de transport (9).

2. Procédé selon la revendication 1, **caractérisé en ce que**, avec les raccords de tuyau (6), (7) et (17) de la doublure intérieure (8), on forme des raccordements de tuyau flexibles entre la cabine (10) et la doublure intérieure (8) du conteneur de transport (9), qui sont chaussés sur les pièces opposées réalisées en forme de douilles sur la cabine (10) et fixés avec des bagues de serrage.

3. Procédé selon la revendication 1 ou 2, **caractérisé en ce que** l'on utilise pour le transport de l'air sous pression sec dépoussiéré.
